# EUROPEAN PATENT SPECIFICATION

(11) **EP 2 688 248 B1**
(45) Date of publication and mention of the grant of the patent: **29.08.2018**
(21) Application number: 12797353.5
(22) Date of filing: 07.06.2012
(51) Int. Cl.: H04L 12/40

(54) **METHOD AND SYSTEM FOR ORDERED IDENTIFYING SLAVE ADDRESS FROM MASTER-SLAVE SCENE BUS**
VERFAHREN UND SYSTEM ZUR GEORDNETEN IDENTIFIZIERUNG VON SLAVE-ADRESSEN AUS EINER MASTER-SLAVE-SZENENSCHIENE
PROCÉDÉ ET SYSTÈME POUR UNE IDENTIFICATION ORDONNÉE D'UNE ADRESSE D'ESCLAVE À PARTIR D'UN BUS DE SCÈNE MAÎTRE-ESCLAVE

(30) Priority: 08.06.2011 CN 201110151913
(43) Date of publication of application: 22.01.2014
(73) Proprietor: ZTE Corporation, Shenzhen, Guangdong 518057 (CN)
(72) Inventor: XIONG, Yong, Shenzhen Guangdong 518057 (CN)
(74) Representative: Platzöder, Michael Christian
(86) International application number: PCT/CN2012/076591
(87) International publication number: WO 2012/167736

(56) References cited:
- EP-A1- 1 284 556
- CN-A- 1 949 734
- CN-A- 101 355 482
- CN-A- 101 482 749
- DE-B3-102007 028 926
- US-A1- 2006 020 377
- US-B2- 7 444 453

## Description

### Technical Field

The present document relates to the communication field, and in particular, to a method and system for orderly identifying slave address from master-slave fieldbus.

### Background of the Related Art

With the development of the technology and the improvement of the living standard, more and more electronic products for industrial control, medical treatment, communication, consumption, etc., are becoming more intelligent, and the embedded system taking the microprocessor as the core is extensively applied day by day, so the filed networking and management of those intelligent devices also become a key point of the embedded application. The user can configure, manage and control the intelligent device through the intelligent interface, such as a serial port, a parallel port, an Ethernet port, etc., provided by the device, the high-speed Ethernet interface on the basis of the complicated TCP/IP protocol is the direction of development in the future, which realizes the abundant monitor and management functions. However, at present, most embedded devices adopt the cheap systems composed of the 8, 16 or 32-bit MCU, and in consideration of the simpleness, convenience, the field bus is also adopted, for instance, RS485 bus, CAN bus, etc., which realizes the LAN communication at the field device level. Wherein, in most devices, the master-slave fieldbus is used for managing, that is, an embedded device (called the master) can monitor other embedded device (called the slave).

When the field LAN is constituted through the master-slave fieldbus, each slave needs to be distinguished through device identification, and the simplest method is to distinguish by the device addresses. Each slave has a unique address, to avoid the bus conflict. However, when some slaves break down and lost the configuration addresses, or the locations of multiple slaves change casually and cause the address confliction, or some slaves are not configured continuously and there are some empty sockets among them, the addresses of the slaves must be reset at this moment for the above-mentioned situations to guarantee the normal communication. such as a keyboard, a display screen, etc., then the address can be set. However, in a lot of situations, in consideration of the cost and space, the slave does not have these interaction devices. This will bring actual problems: how to set the address of the slave conveniently? and how to position the slave location quickly?

The simplest method is to set the addresses of the slaves sequentially according to the connection sequence of the fieldbus or the socket sequence of the slaves. But the problems that some slaves are extracted and empty sockets exist among them are unable to be solved.

Another feasible method is that an input signal line, i.e. a chip selection signal line, is added for each slave additionally to set the address for each slave through the master. For example, the master enables the chip selection of the first slave at first, sets the address of the slave as 1 (other the slaves does not respond to the setting command because the chip selection signal is invalid), and sets the addresses of other slaves sequentially. This method is simpler, but it needs to add a plurality of signal lines; and especially when there are many networking devices, many signal lines are required to be added, and this is inapplicable in a lot of situations.

Another feasible method is to add a pair of signal lines, all slave signals are cascaded through the controllable connecting devices, such as, a double-pole double-throw (DSDT) switch or a relay. By means of token ring, each slave can be identified orderly. However, the cost of this method is high, and for the devices, such as, the double-pole double-throw (DSDT) switch controlling the signal connection or the relay, etc., the reliability is not high; when there is a breakdown, the whole serial loop is disconnected, and the address can only be identified orderly, while the situation of the vacant socket (the slave is not in the position) can not be acknowledged.

The features of the preamble of the independent claims are known from US2006/020377A1. Related technologies are also known from EP1284556A1, DE102007028926 B3 and CN101482749A.

### Summary of the Invention

The main objective of the present document is to provide a method and system for orderly identifying slave address from master-slave fieldbus as defined in the independent claims, to automatically orderly identify the slave address in the master-slave fieldbus.

A method for orderly identifying slave address from master-slave fieldbus is provided, comprising:
setting a socket voltage bus (SVB) which is used to connect a master and slaves in series, wherein, at least one diode is connected in series between individual slaves by the SVB bus; and
when slave addresses conflict or a new slave is added, the master controlling the slave to output a preset voltage to the SVB bus, and resetting each slave address by detecting a voltage value of each slave.

Preferably, the master controls the slave to output a preset voltage to the SVB bus, and resets each slave address by detecting a voltage value of each slave, comprising the following steps:
(a). the master obtaining IDs of all slaves;
(b). assigning a slave of any ID to output the preset voltage to the SVB bus;
(c). detecting the voltage value of a local terminal, and receiving the voltage value and the ID of each slave detected and reported by each slave at the same time;
(d). obtaining a corresponding relationship of the ID and the address of the slave of which the voltage value is not 0 according to the voltage values of the master and the slave, and obtaining the address of the slave; and
(e). when there is a slave of which a voltage value is 0, assigning any slave of which the voltage value is 0 to output the preset voltage to the SVB bus, and returning to step (c).

Preferably, assigning a slave of any ID to output the preset voltage to the SVB bus comprises:
sending a control signal to a control switch of the slave corresponding to said any ID through a field communication bus, and connecting a voltage output end of the slave and the SVB bus through that control switch.

Preferably, detecting the voltage value of the local terminal comprises:
detecting the voltage value of the local terminal through an A/D detection circuit.

Preferably, obtaining a corresponding relationship of the ID and the address of the slave of which the voltage value is not 0 according to the voltage values and the ID comprises:
calculating a voltage difference between the voltage value of the master and the voltage value of each slave respectively;
judging a socket number to which each slave belongs according to the voltage difference and a voltage drop of the diode; and
setting the socket number as the address of the corresponding slave.

A system for orderly identifying slave address from master-slave fieldbus is provided, comprising a master, at least one slave and a socket voltage bus (SVB), wherein,
the SVB bus is configured to: connect the master and the slaves in series, wherein at least one diode is connected in series between individual slaves by the SVB bus; and
the master is configured to: when slave addresses conflict or a new slave is added, control the slave to output a preset voltage to the SVB bus, and reset each slave address by detecting a voltage value of each slave.

Preferably, the master comprises:
an ID obtaining module, configured to obtain IDs of all slaves;
an assigning module, configured to assign a slave of any ID to output the preset voltage to the SVB bus;
a detection module, configured to detect the voltage value of a local terminal, and receive the voltage value and the ID of each slave detected and reported by each slave at the same time;
an address obtaining module, configured to obtain a corresponding relationship of the ID and the address of the slave of which the voltage value is not 0 according to the voltage values of the master and the slave, and obtain the address of the slave; and
a circulation module, configured to, when there is a slave of which a voltage value is 0, assign any slave of which the voltage value is 0 to output the preset voltage to the SVB bus, and return to detect the voltage value of the local terminal by the detection module and receive the voltage value and the ID of each slave detected and reported by each slave at the same time.

Preferably, the assigning module is configured to:
send a control signal to a control switch of the slave corresponding to said any ID through a field communication bus, and connect a voltage output end of the slave and the SVB bus through that control switch.

Preferably, the detection module is configured to:
detect the voltage value of the local terminal through an A/D detection circuit.

Preferably, the address obtaining module comprises:
a calculation unit, configured to calculate a voltage difference between the voltage value of the master and the voltage value of each slave respectively;
a judging unit, configured to judge a socket number to which each slave belongs according to the voltage difference and a voltage drop of the diode; and
a setting unit, configured to set the socket number as the address of the corresponding slave.

A method and system for orderly identifying slave addresses from a master-slave fieldbus are provided, which solves the problem of the bus conflict or the wrong identification caused by the address loss of the slave in the fieldbus network, completes resetting and identifying the address of each slave in a case of only two transmission signal lines and a little bit hardware being added, and guarantees the normal communication of the fieldbus. In addition, it can also realize free extension and automatic identification when putting into use for the slaves, and improve the intelligent degree of the monitor system.

The invention is carried out according to the appended independent claims. Optional features of the invention are carried out according to the dependent claims.

### Brief Description of Drawings

FIG. 1 is a flow chart of a method for orderly identifying slave addresses from a master-slave fieldbus according to an embodiment of the present document;
FIG. 2 is a flow chart of a step of a master setting a slave address in a method for orderly identifying slave addresses from a master-slave fieldbus according to an embodiment of the present document;
FIG. 3 is a flow chart of a step of obtaining an address in a method for orderly identifying slave addresses from a master-slave fieldbus according to an embodiment of the present document;
FIG. 4 is a layout of a fieldbus in a method for orderly identifying slave addresses from a master-slave fieldbus according to an embodiment of the present document;
FIG. 5 is a layout of a fieldbus of a rectifier in a method for orderly identifying slave addresses from a master-slave fieldbus according to an embodiment of the present document;
FIG. 6 is a structure diagram of a system for orderly identifying slave addresses from a master-slave fieldbus according to an embodiment of the present document;
FIG. 7 is a structure diagram of a master in a system for orderly identifying slave addresses from a master-slave fieldbus according to an embodiment of the present document;
FIG. 8 is a structure diagram of an address obtaining module in a system for orderly identifying slave addresses from a master-slave fieldbus according to an embodiment of the present document.

The implementation of the objective, the function features and the advantage of the present document will be described in detail combining with the embodiments and referring to the accompanying drawings.

### Preferred Embodiments of the Invention

It should be understood that the embodiments described here are only used to explain the present document, and is not intended to limit the present document.

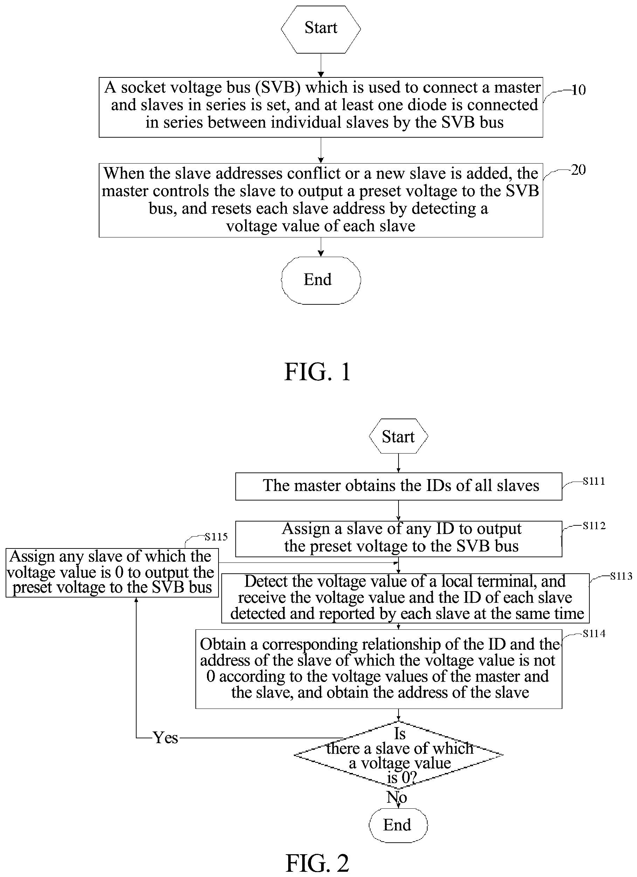

Referring to FIG. 1, an embodiment of a method for orderly identifying slave addresses from a master-slave fieldbus of the present document is provided, including the following steps:
in step S10, a socket voltage bus (SVB) which is used to connect a master and slaves in series is set, and at least one diode is connected in series between individual slaves by the SVB bus;
on the SVB bus, the individual slaves are connected in a series through the diodes. When the master finds that the slave addresses conflict or a slave address needs to be reset, the master notifies a certain assigned slave to output the voltage on the SVB bus through the fieldbus; because of the characteristics of the diode, such as unidirectional conduction and fixed forward voltage drop, all slaves of different sockets detect specific and different voltage amplitudes from the SVB, thus distinguishing the sockets and resetting the slave addresses.

In step S11, when the slave addresses conflict or a new slave is added, the master controls the slave to output a preset voltage to the SVB bus, and resets each slave address by detecting a voltage value of each slave.

Referring to FIG. 2, the step S11 further includes the following steps:
in step S111, the master obtains the IDs of all slaves;
in step S112, a slave of any ID is assigned to output the preset voltage to the SVB bus;
in step S113, it is to detect the voltage value of a local terminal, and receive the voltage value and the ID of each slave detected and reported by each slave at the same time;
in step S114, it is to obtain a corresponding relationship of the ID and the address of the slave of which the voltage value is not 0 according to the voltage values of the master and the slave, and obtain the address of the slave; and
in step S115, when there is a slave of which a voltage value is 0, it is to assign any slave of which the voltage value is 0 to output the preset voltage to the SVB bus, and return to step (c); or else, the flow ends.

In the above-mentioned embodiment, the step S112 specifically includes:
sending a control signal to a control switch of the slave corresponding to the any ID through a field communication bus, and connecting a voltage output end of the slave and the SVB bus through that control switch.

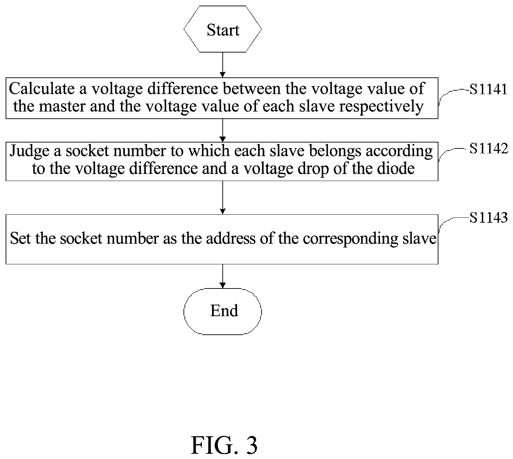

In the following description the term "embodiment" is to be interpreted as an example, whereas the scope of protection is only defined by the subject matter of the appended claims. Referring to FIG. 3, the step S114 in the above-mentioned embodiment specifically includes the following steps:
in step S1141, it is to calculate a voltage difference between the voltage value of the master and the voltage value of each slave respectively;
in step S1142, it is to judge a socket number to which each slave belongs according to the voltage difference and a voltage drop of the diode; and
in step S1143, it is to set the socket number as the address of the corresponding slave.

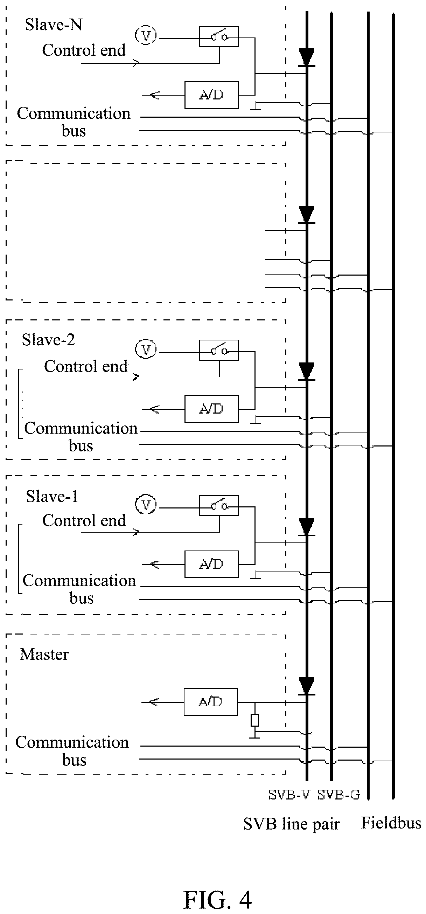

Referring to FIG. 4, the technical scheme of the present embodiment is described in detail with reference to the accompanying drawings hereinafter.

The fieldbus network is constructed at first, which includes selecting the cable, selecting the device, designing the circuit, engineering application etc. Generally speaking, the communication cable of the fieldbus can be the twisted-pairs cable. In the present embodiment, the adopted twisted-pairs cable is used for ensuring the physical connection of the field communication bus, additionally, it also requires one pair of cables (for convenience explanation, called SVB bus) used for transmitting the socket voltage signal; the pair of cables can be the normal cables, and also can be the twisted pair. If the fieldbus is the RS485 bus or the CAN bus, then it needs to adopt at least 4-wiring-system (2 pairs) twisted-pair cables; and if adopting the RS422 bus, then it needs to adopt at least 6-wiring-system (3 pairs) twisted-pair cables.

The fieldbus wiring can adopt the series connection address distribution mode; wherein, the master is located at one end of the field communication bus, the slave of the first socket is nearest from the master, and the slaves are connected sequentially, and the socket number of the slave which is farthest from the master is largest, and that slave is connected in series at the bus end. The method of using the field communication bus does not make any change, used for the normal communication between the master and the slave, which monitors the system.

The newly-added SVB bus is used for connecting the master and the slave in series, and that pair of SVB buses are defined as a public ground line SVB-G and a voltage signal line SVB-V. The unidirectional conduction diodes are connected in series between individual slaves at the SVB-V, and the number of the diodes is set as one or more depending upon requirements; after the voltage passes through the diode, a stable voltage drop of the voltage is obtain, so as to ensure that the slave at each socket can detect different voltage values, thus determining different socket numbers with different voltage values, and then the socket number to which the slave belongs is set as the address of the slave, and the SVB bus forms the loop through the master. The master and each slave need to add one device for detecting the voltage such as A/D detection circuit, used for detecting the voltage value on the SVB-V line at the present socket; the master can add a resistance loop at the SVB bus end, used for ensuring the minimum current conducted by individual diodes connected in series, and this also can be implemented by using the input impedance circuit of the A/D detection circuit.

When the master identifies that there is an address conflict of the slaves on the field communication bus or when there is a new slave added, the procedure of resetting the address of the slave is started:
(1). the master distributes a command to require all slaves to report the unique identification ID of that slave through the existing field communication bus, such as, the CAN bus, the RS485 bus, the RS422 bus, etc.;
(2). each slave informs the master of the ID of that slave through the field communication bus respectively. As to the CAN network, it can realize the conflict detection by itself, so there is not any problem for informing the ID; as to the networks such as RS485, RS422, etc., the master also can be informed of the ID by using different ID numbers through a simple time back-off algorithm. The master receives the IDs fed back by all slaves, and accordingly knows the number of the slaves in the current network;
(3). the master assigns the slave of a certain ID number to enter "socket identification" state through the field communication bus, that is, outputting the voltage to the SVB bus;
(4). the slave which enters the "socket identification" state outputs a certain voltage to the SVB bus through the control end, and the control end can realize relay, thyristor, BJT, MOSFET, IGBT, etc., with the common controllable devices;
(5). all the slaves detect the voltage value on the SVB bus through the A/D detection circuit, including the slave entering the "socket identification" state and outputting the voltage;
(6). the master also detects the voltage value on the SVB bus through the A/D detection circuit;
(7). all the slaves send the detected voltage values on the SVB bus to the master through the field communication bus sequentially;
(8). because the voltage values on the SVB bus of individual sockets are different, the master can determine the socket number of each slave;
(9). because the diodes connected in series on the SVB bus are unidirectional conducted, all slaves of which the sockets are behind the one in the socket identification state do not form the current circuit, and the detected voltage values on the SVB bus are all 0; and because of the characteristic of the fixed forward voltage drop of the diode, all slaves of which the sockets are before the one in the socket identification state detect the voltage value on the SVB bus; taking one diode as an example, the voltage value will drop by about 0.7V (about 0.3V for the silicon tube and the germanium tube) sequentially;
(10). the master informs the slave to quit the "socket identification" state through the field communication bus, and the slave turns off the output voltage to the SVB bus;
(11). if the master finds a slave which reports that the detected voltage value of the SVB bus is 0, then it assigns the slave of any ID number of which the voltage value is 0 to enter the "socket identification" state through the field communication bus; and it is to return to step (4), until the detected voltage values of the SVB bus reported by all the slaves are not 0;
(12). the master can obtain the socket of each slave according to the detected voltage value of the SVB reported by the slave of each ID number; when the socket number decreases successively according to the distance from the master; the voltage value of the SVB detected by the first slave should be same with the voltage value detected by the master; the voltage value of the SVB detected by the second slave drops by about 0.7V (about 0.3V for the silicon tube and the germanium tube) sequentially, and so on;
(13). the master sets the address and the socket number of each slave to be the same according to each socket number, so as to identify the address orderly.

The present embodiment applies the characteristics of the diode, i.e., unidirectional conduction and forward voltage drop, and ingeniously identifies the socket orderly by connecting all diodes in series, which solves the problem of the mismatch of the socket and the address, facilitates the field maintenance and service, and completely overcomes the defect of the address changing casually caused by the slave automatic competition. Compared with the case of realizing the address setting by means of the hardware configuration, such as the toggle switch, etc., the present embodiment realizes the fully automatically setting, does not need manpower participation, and avoids the common problems, such as the address repeating, the mismatch of the address / socket caused by manpower negligence, etc.

Preferably, the cost of the present embodiment is low, and it is realized easily. In the bus system, it only needs to add a pair of SVB buses, which can use the standard conductors, such as RJ45, RJ11,etc., with low cost; the slave only adds one or more diodes (such as commonly used IN4002) a controllable device and a voltage detection circuit of the SVB bus on the rear panel, wherein, the controllable device can be common relay, thyristor, BJT, MOSFET, IGBT, etc., while the voltage detection circuit only needs to multiplex the A/D because the slave normally has the A/D function.

Preferably, the adaptability of the present embodiment is strong. If the typical voltage drop of the diode on each SVB bus is 0.7V (silicon tube), when the slave is a rectifier, its normal output voltage is 53.5V. Therefore, it can be suitable for an ultra-large capacity communication DC power system composed of 53.5/0.7 = 76 rectifiers, so the adaptability is very wide. If the output voltage of the rectifier is raised to the equalized charging point 56.4V, or other diodes of which the forward voltage drop is lower (the germanium tube, 0.3V) are selected, then it can support the power system with lager capacity (more nodes), and the expansibility is good.

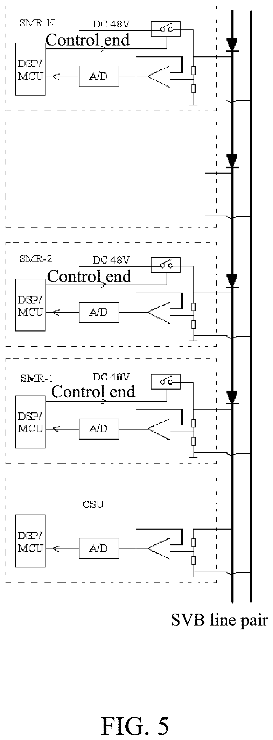

Referring to FIG. 5, the above-mentioned embodiment is further illustrated in detail by taking the rectifier as an example:
a certain company produces the communication base station power system of a certain type, which is applied to each telecommunication equipment manufacturer and operator of the whole country extensively. That power system is composed of AC distribution, DC distribution, 40 rectifiers at most (as the slaves) and a monitoring unit (as the master). There is no other human-computer interaction device besides an alarm indicator light and a CAN interface due to the requirement of the power density, the cost pressure, and the requirement of plug and play. Therefore, the monitoring unit is required to communicate with those 40 rectifiers through the CAN bus, and distinguish and identify each rectifier through the address, so that the monitoring unit obtains the data and alarm information of each rectifier in polling, and controls the running state of the rectifier.

### The first step: Hardware implementation

The cable is selected. Because the CAN bus is adopted between the master and the slave, only one pair of cables are required, and another pair of cables are added as the SVB bus. The communication cable can adopt at least 4-wiring system (2 pairs) twisted-pairs cables, for example, the common 10/100BASE - Ethernet cable T568A/B (this cable includes 4 pairs of color code twisted-pairs cables, and can also can be expanded for backup), and the conductor selects the supporting RJ45.

The network is connected. In order to connect the monitoring unit and each rectifier, and distribute the address for each rectifier, it is needed to connect in series sequentially through the Ethernet cable. For wiring, it is guaranteed that the monitoring unit is located at one end, other rectifiers are connected in series sequentially, and the rectifier at the furthest socket is located at the end of the network cable. The rear panel where each rectifier is inserted needs two RJ45 conductors, wherein, the two lines of the CAN bus (CAN-H, CAN-L) are directly short on the rear panel. One line of the SVB (SVB-G) is directly short, while one diode (such as, a common IN4002) is connected in series within another line (SVB-V). It also needs the similar alteration on the rear panel of the monitoring unit, but the diode can be omitted.

The rectifier circuit is rectified. Each rectifier has a 53.5V DC voltage output by itself, and a relay is added to enable to output onto the SVB-V line. Meanwhile, an A/D detection circuit is added, to detect the voltage amplitude on the SVB-V line. That A/D detection circuit can be set into the A/D detection circuit built in the rectifier after regulated by an operational amplifier firstly.

The monitoring unit is rectified. The monitoring unit adds an A/D detection circuit to detect the voltage value on the SVB-V line. That A/D detection circuit can be set into the A/D detection circuit built in the monitoring unit after regulated by an operational amplifier firstly, and forms the SVB loop by using the resistance of the regulated circuit. The resistance suitable for the regulated circuit is selected to guarantee that all diodes can be conducted within the range of the whole voltage. Supposing that the fully conducting minimum current of the diode is 5mA, the number of the rectifiers configured by the system is 40 at most, then it is ok that the resistance is less than (53.5-0.7* 39) /5, that is, 5.2KΩ. Of course, the less the selected resistance is, the larger the current flowing through the diode is; but it will consume more power of the system, so it is suggested to select the upper limit of the resistance value, such as 5KΩ.

When the monitoring unit or the rectifier identifies that there is an address conflict of the rectifier on the CAN bus or when there is a new rectifier input, the procedure of resetting the address of the rectifier is started:
(1). the monitoring unit sends the command to require all rectifiers to report the unique identification IDs through the CAN bus;
(2). all rectifiers respond with the corresponding IDs to the monitoring master through the CAN bus;
(3). the monitoring unit receives the IDs responded by all rectifiers, and then knows the number of the rectifiers in the current network in view of the above;
(4). the monitoring unit sends the command through the CAN bus to assign the rectifier of any ID number to enter a "socket identification" state;
(5). the rectifier of that ID enters the "socket identification" state and outputs a voltage value of 53.5V to the SVB bus;
(6). all the rectifiers detect the voltage values on the SVB bus through the A/D detection circuit;
(7). the monitoring unit also detects the voltage value on the SVB bus through the A/D detection circuit;
(8). all the rectifiers report the detected voltage values on the SVB bus to the monitoring unit through the CAN bus;
(9). because the voltage values on the SVB bus of individual sockets are different, the monitoring unit can determine the socket number of each slave;
(10). the monitoring unit sends the command through the CAN bus to inform the rectifier of that ID to quit the "socket identification" state, and the rectifier turns off the output voltage to the SVB bus, and the voltage on the SVB bus is 0 at that time;
(11). the monitoring unit processes the voltage values of the SVB bus reported by all rectifiers; if it finds that there is a voltage value which is 0, then it sends the command through the CAN bus to assign the rectifier of another different ID of which the voltage value is not 0 to enter the "socket identification" state; and it is to return to step (5), until all the detected voltage values of the SVB bus reported by all rectifiers are not 0;
(12). the monitoring unit can obtain the socket number of each rectifier according to the detected voltage value of the SVB bus reported by the rectifier of each ID; for example, the voltage value of the SVB bus detected by the first rectifier should be same with the voltage value of the SVB bus detected by the monitoring unit; the voltage value of the SVB bus detected by the second rectifier drops by about 0.7V (about 0.3V for the silicon tube and the germanium tube) sequentially, and so on;
(13). the monitoring unit sets the address consistent with the socket number of each rectifier slave according to each socket number, so as to identify the address orderly.

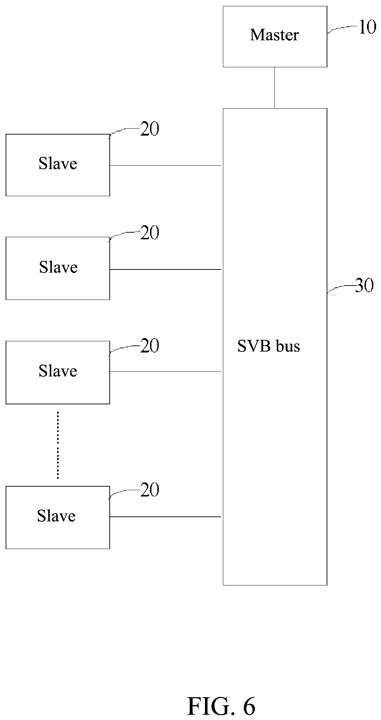

Referring to FIG. 6, an embodiment of a system for orderly identifying slave addresses from a master-slave fieldbus is provided, including a master 10, at least one slave 20 and a SVB bus 30, wherein,
the SVB bus 30 is used to connect the master 10 and the slaves 20 in series, and at least one diode is connected in series between individual slaves 20 by the SVB bus 30; and
for the master 10, when the addresses of the slaves 20 conflict or a new slave 20 is added, the master 10 controls the slave 20 to output a preset voltage to the SVB bus 30, and resets each slave address by detecting a voltage value of each slave 20.

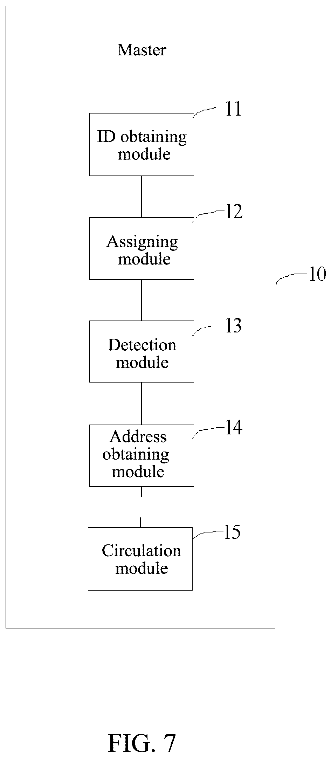

Referring to FIG. 7, in one embodiment, the master 10 includes:
an ID obtaining module 11, configured to obtain IDs of all slaves 20;
an assigning module 12, configured to assign a slave 20 of any ID to output the preset voltage to the SVB bus 30;
a detection module 13, configured to detect the voltage value of a local terminal, and receive the voltage value and the ID of each slave 20 detected and reported by each slave 20 at the same time;
an address obtaining module 14, configured to obtain a corresponding relationship of the ID and the address of the slave 20 of which the voltage value is not 0 according to the voltage values of the master 10 and the slave 20, and obtain the address of the slave 20; and
a circulation module 15, configured to, when there is a slave 20 of which a voltage value is 0, assign any slave 20 of which the voltage value is 0 to output the preset voltage to the SVB bus 30, and return to detect the voltage value of the local terminal by the detection module and receive the voltage value and the ID of each slave 20 detected and reported by each slave 20 at the same time.

In the above-mentioned embodiment, the assigning module 12 is specifically used to:
send a control signal to a control switch of the slave 20 corresponding to the any ID through a field communication bus, and connect a voltage output end of the slave 20 and the SVB bus 30 through that control switch.

In the above-mentioned embodiment, the detection module 13 is specifically used to:
detect the voltage value of the local terminal through an A/D detection circuit.

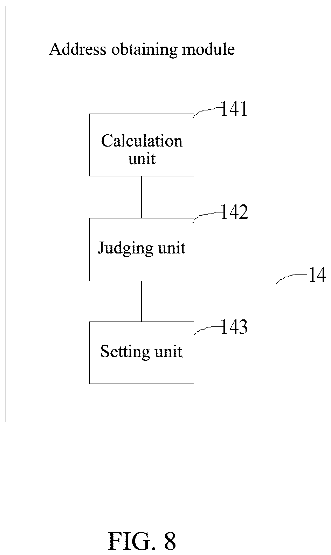

Referring to FIG. 8, in the above-mentioned embodiment, the address obtaining module 14 includes:
a calculation unit 141, used to calculate a voltage difference between the voltage value of the master 10 and the voltage value of each slave 20 respectively;
a judging unit 142, used to judge a socket number to which each slave 20 belongs according to the voltage difference and a voltage drop of the diode; and
a setting unit 143, used to set the socket number as the address of the corresponding slave 20.

The technical scheme of the present embodiment is described in detail with reference to the accompanying drawings hereinafter.

The fieldbus network is constructed at first, including selecting the cable, selecting the device, designing the circuit, engineering application etc. Generally speaking, the communication cable of the fieldbus can be the twisted-pairs cable. In the present embodiment, the twisted-pairs cable adopted, besides being used for ensuring the physical connection of the field communication bus, also needs one pair of cables (for convenience explanation, called SVB bus) used for transmitting the socket voltage signal; the one pair of cables can be the normal cables, and also can be the twisted pair. If the fieldbus is the RS485 bus or the CAN bus, then it needs to adopt at least 4-wiring system (2 pairs) twisted-pairs cables; and if adopting the RS422 bus, then it needs to adopt at least 6-wiring system (3 pairs) twisted-pairs cables.

The fieldbus wiring can adopt the series connection address distribution mode; wherein, the master 10 is located at one end of the field communication bus, the slave 20 of the first socket is nearest from the master 10, connected sequentially, and the socket number of the slave 20 which is farthest from the master is the largest, and that slave is connected in series at the bus end. No change is made for the usage method of the field communication bus which is used for the normal communication between the master 10 and the slave 20, and monitors the system.

The newly-added SVB bus is used for connecting the master 10 and the slave 20 in series, and that pair of SVB buses 30 are defined as a public ground line SVB-G and a voltage signal line SVB-V. The unidirectional conduction diodes are connected in series between individual slaves at the SVB-V, and the number of the diodes is set as one or more depending upon requirements; after the voltage passes the diode, a stable voltage drop of the voltage is obtained, so as to ensure that the slaves 20 at each socket can detect different voltage values, thus determining different socket numbers through different voltage values, and then the socket number to which the slave 20 belongs is set as the address of the slave 20, and the SVB bus 30 forms the loop through the master 10. The master 10 and each slave 20 need to add a device for detecting the voltage such as A/D detection circuit, used for detecting the voltage value on the SVB-V line at the present socket; the master 10 can add a resistance loop at the end of the SVB bus 30, used for ensuring the minimum current conducted by individual diodes connected in series, and this also can be implemented by using the input impedance circuit of the A/D detection circuit.

When the master 10 identifies that there is an address conflict of the slave 20 on the field communication bus or when there is a new slave 20 added, the master 10 resets the address of the slave 20 by the following ways:
(1). the ID obtaining module 11 sends the command to require all slaves 20 to report the unique identification ID of the slave through the existing field communication bus, such as, the CAN bus, the RS485 bus, the RS422 bus, etc.;
(2). each slave 20 informs the ID obtaining module 11 of the ID of that slave 20 through the field communication bus respectively. As to the CAN network, it can realize the conflict detection by itself, so there is not any problem for informing the ID; as to the networks such as RS485, RS422, etc., the ID obtaining module 11 can also be informed of the ID by using different ID numbers through a simple time back-off algorithm. The ID obtaining module 11 receives the IDs fed back by all slaves 20, and then knows the number of the slaves 20 in the current network in view of the above;
(3). the assigning module 12 assigns the slave 20 of a certain ID number to enter a "socket identification" state through the field communication bus, that is, outputting the voltage to the SVB bus 30;
(4). the slave 20 which enters the "socket identification" state outputs a certain voltage to the SVB bus 30 through the control end, and the control end can realize relay, thyristor, BJT, MOSFET, IGBT, etc., by using the common controllable devices;
(5). all the slaves 20 detect the voltage values on the SVB bus 30 through the A/D detection circuit, including the slave 20 entering the "socket identification" state and outputting the voltage;
(6). the detection module 13 also detects the voltage value on the SVB bus 30 through the A/D detection circuit;
(7). all the slaves 20 transmit the detected voltage values on the SVB bus 30 to the detection module 13 through the field communication bus sequentially;
(8). because the voltage values on the SVB bus 30 of individual sockets are different, the address obtaining module 14 can determine the socket number of each slave 20;
(9). because the diodes connected in series on the SVB bus 30 are unidirectional conducted, all slaves 20 of which the sockets are behind the one in the socket identification state do not form the current loop, and the detected voltage values on the SVB bus 30 are all 0; and because of the characteristic of the fixed forward voltage drop of the diode, all slaves 20 of which the sockets are before the one in the socket identification state detect the voltage value on the SVB bus 30; taking one diode as an example, the voltage value will drop by about 0.7V (about 0.3V for the silicon tube and the germanium tube) sequentially;
(10). the master 10 informs the slave 20 to quit the "socket identification" state through the field communication bus, and the slave 20 turns off the output voltage to the SVB bus 30;
(11). if the circulation module 15 finds that there is a slave 20 reporting that the detected voltage value of the SVB bus 30 is 0, then it assigns the slave 20 of any ID number of which the voltage value is 0 to enter the "socket identification" state through the field communication bus; and it returns to detect the voltage value of the SVB bus by the detection module 13 and receive the voltage values and IDs detected and reported by each slave 20, until the detected voltage values of the SVB bus 30 reported by all the slaves 20 are not 0;
(12). the judging unit 142 of the address obtaining module 14 can obtain the socket of each slave 20 according to the detected voltage value of the SVB reported by the slave 20 of each ID number; when the socket number decreases progressively according to the distance from the master 10; the voltage value of the SVB detected by the first slave 20 should be the same with the voltage value detected by the master 10; the voltage value of the SVB detected by the second slave 20 drops by about 0.7V (about 0.3V for the silicon tube and the germanium tube) sequentially, and so on;
(13). the setting unit 143 of the address obtaining module 14 sets the address consistent with the socket number of each slave 20 according to each socket number, so as to identify the address orderly.

The present embodiment applies the characteristics of the diode, i.e., unidirectional conduction and forward voltage drop, and ingeniously identifies the socket orderly by connecting all diodes in series, which solves the problem of the mismatch of the socket and the address, facilitates the field maintenance and service, and completely overcomes the defect of the address changing casually caused by the automatic competition of the slave 20. Compared with the case of realizing the address setting by means of the hardware configuration, such as the toggle switch, etc., the present embodiment realizes the fully automatically setting, does not need manpower participation, and avoids the common problems, such as the address repeating, the mismatch of the address / socket caused by manpower negligence, etc.

Preferably, the cost of the present embodiment is low, and it is realized easily. In the bus system, it only needs to add a pair of SVB buses 30, which can use the standard conductors, such as RJ45, RJ11,etc., with low cost; the slave 20 only adds one or more diodes (such as common IN4002), a controllable device and a voltage detection circuit of the SVB bus 30 on the rear panel, wherein, the controllable device can be common relay, thyristor, BJT, MOSFET, IGBT, etc., while the voltage detection circuit only needs to multiplex the A/D because the slave 20 normally has the A/D function.

Preferably, the adaptability of the present embodiment is strong. If the typical voltage drop of the diode on each SVB bus 30 is 0.7V (silicon tube), when the slave 20 is a rectifier, its normal output voltage is 53.5V. Therefore, it can be suitable for an ultra-large capacity communication DC power system composed of 53.5/0.7 = 76 rectifiers, so the adaptability is very wide. If the output voltage of the rectifier is raised to the equalized charging point 56.4V, or other diodes of which the forward voltage drop is lower (the germanium tube, 0.3V) are selected, then it can support the power system with lager capacity (more nodes), and the expansibility is good.

The above-mentioned embodiment is further illustrated in detail by taking the rectifier as an example:
a certain company produces the communication base station power system of a certain type, which is applied to each telecommunication equipment manufacturer and operator of the whole country extensively. That power system is composed of AC distribution, DC distribution, 40 rectifiers at most (as the slaves 20) and a monitoring unit (as the master 10). There is no other human-computer interaction devices beside an alarm indicator light and a CAN interface due to the requirement of the power density, the cost pressure, and the requirement of plug and play. Therefore, the monitoring unit is required to communicate with those 40 rectifiers through the CAN bus, and distinguish and identify each rectifier through the address, so that the monitoring unit obtains the data and alarm information of each rectifier in polling, and controls the running state of the rectifier.

### The first step: Hardware implementation

The cable is selected. Because the CAN bus is adopted between the master and the slave, only one pair of cables are required, and another pair of cables are added as the SVB bus 30. The communication cable can adopt at least 4-wiring system (2 pairs) twisted-pairs cables, for example, the common 10/100BASE - Ethernet cable T568A/B (this cable includes 4 pairs of color code twisted-pairs cables, and can also can be expanded for backup), and the conductor selects the supporting RJ45.

The network is connected. In order to connect the monitoring unit and each rectifier, and distribute the address of each rectifier, it is needed to connect in series sequentially through the Ethernet cable. For wiring, it is guaranteed that the monitoring unit is located at one end, other rectifiers are connected in series sequentially, and the rectifier at the furthest socket is located at the end of the network cable. The rear panel where each rectifier is inserted needs two RJ45 conductors, wherein, the two lines of the CAN bus (CAN-H, CAN-L) are directly short on the rear panel. One line of the SVB (SVB-G) is directly short, while one diode (such as, a common IN4002) is connected in series within another line (SVB-V). It also needs the similar alteration on the rear panel of the monitoring unit, but the diode can be omitted.

The rectifier circuit is rectified. Each rectifier has a 53.5V DC voltage output by itself, and a relay is added to enable to output onto the SVB-V line. Meanwhile, an A/D detection circuit is added, to detect the voltage amplitude on the SVB-V line. That A/D detection circuit can be set into the A/D detection circuit built in the rectifier after regulated by an operational amplifier firstly.

The monitoring unit is rectified. The monitoring unit adds an A/D detection circuit to detect the voltage value on the SVB-V line. That A/D detection circuit can be set into the A/D detection circuit built in the monitoring unit after regulated by an operational amplifier firstly, and forms the SVB loop by using the resistance of the regulated circuit. The resistance suitable for the regulated circuit is selected to guarantee that all diodes can be conducted within the range of the whole voltage. Supposing that the fully conducting minimum current of the diode is 5mA, the number of the rectifiers configured by the system is 40 at most, then it is ok that the resistance is less than (53.5-0.7* 39) /5, that is, 5.2KΩ. Of course, the less the selected resistance is, the larger the current flowing through the diode is; but it will consume more power of the system, so it is suggested to select the upper limit of the resistance value, such as 5KΩ.

When the monitoring unit or the rectifier identifies that there is an address conflict of the rectifier on the CAN bus or when there is a new rectifier input, the monitoring unit resets the address of the rectifier by the following way:
(1). the monitoring unit sends the command to require all rectifiers to report the unique identification IDs through the CAN bus;
(2). all rectifiers respond with the corresponding IDs to the monitoring master 10 through the CAN bus;
(3). the monitoring unit receives the IDs responded by all rectifiers, and then knows the number of the rectifiers in the current network in view of the above;
(4). the monitoring unit sends the command through the CAN bus to assign the rectifier of any ID number to enter a "socket identification" state;
(5). the rectifier of that ID enters the "socket identification" state and outputs a voltage value of 53.5V to the SVB bus 30;
(6). all the rectifiers detect the voltage values on the SVB bus 30 through the A/D detection circuit;
(7). the monitoring unit also detects the voltage value on the SVB bus through the A/D detection circuit;
(8). all the rectifiers report the detected voltage values on the SVB bus to the monitoring unit through the CAN bus;
(9). because the voltage values on the SVB bus 30 of individual sockets are different, the monitoring unit can determine the socket number of each slave;
(10). the monitoring unit sends the command through the CAN bus to inform the rectifier of that ID to quit the "socket identification" state, and the rectifier turns off the output voltage to the SVB bus 30, and the voltage on the SVB bus 30 is 0 at that time;
(11). the monitoring unit processes the voltage values of the SVB bus 30 reported by all rectifiers; if it finds that there is a voltage value which is 0, then it sends the command through the CAN bus to assign the rectifier of another different ID of which the voltage value is not 0 to enter the "socket identification" state; and it is to return to step (5), until all the detected voltage values of the SVB bus 30 reported by all rectifiers are not 0;
(12). the monitoring unit can obtain the socket number of each rectifier according to the detected voltage value of the SVB bus 30 reported by the rectifier of each ID; for example, the voltage value of the SVB bus 30 detected by the first rectifier should be same with the voltage value of the SVB bus 30 detected by the monitoring unit; the voltage value of the SVB bus 30 detected by the second rectifier drops by about 0.7V (about 0.3V for the silicon tube and the germanium tube) sequentially, and so on;
(13). the monitoring unit sets the address consistent with the socket number of each rectifier slave 20 according to each socket number, so as to identify the address orderly.

The above description is only for the preferred embodiments of the present document and is not intended to limit the patent protection scope of the present document. All equivalent structures or equivalent procedures conversion made by utilizing the specification and the accompanying drawing contents of the present document, or direct or indirect application in other relevant technical fields, should be included within the patent protection scope of the present document in a similar way.

### Industrial Applicability

The embodiment of the present document provides a method and system for orderly identifying slave addresses from a master-slave fieldbus, which solves the problem of the bus conflict or the wrong identification caused by the address loss of the slave in the fieldbus network, completes resetting and identifying the address of each slave in a case of only two transmission signal lines and a little bit hardware being added, and guarantees the normal communication of the fieldbus. In addition, it can also realize free extension and automatic identification when putting into use for the slaves, and improve the intelligent degree of the monitor system.

## Claims

1. A method for orderly identifying slave addresses from a master-slave fieldbus, **characterized by** comprising:
setting (S10) a socket voltage bus, SVB, which is used to connect a master and slaves in series, wherein, at least one diode is connected in series between individual slaves by the SVB bus; and
when slave addresses conflict or a new slave is added, the master controlling (S11) the slave to output a preset voltage to the SVB bus, and resetting each slave address by detecting a voltage value of each slave, comprising:
(a). the master obtaining (S111) IDs of all slaves;
(b). the master assigning (S112) a slave of any ID to output the preset voltage to the SVB bus;
(c). the master detecting (S113) the voltage value of a local terminal, and receiving (S113) the voltage value and the ID of each slave detected and reported by each slave at the same time;
(d). the master obtaining (S114) a corresponding relationship of the ID and the address of the slave of which the voltage value is not 0 according to the voltage values of the master and the slave, and obtaining (S114) the address of the slave by:
calculating (S1141) a voltage difference between the voltage value of the master and the voltage value of each slave respectively;
judging (S1142) a socket number to which each slave belongs according to the voltage difference and a voltage drop of the diode; and
setting (S1143) the socket number as the address of a corresponding slave; and
(e). when there is a slave of which a voltage value is 0, the master assigning (S115) any slave of which the voltage value is 0 to output the preset voltage to the SVB bus, and returning (S115) to step (c), until the detected voltage values of the SVB reported by all the slaves are not 0.

2. The method according to claim 1, wherein, assigning (S112) a slave of any ID to output the preset voltage to the SVB bus comprises:
sending a control signal to a control switch of the slave corresponding to said any ID through a field communication bus, and connecting a voltage output end of the slave and the SVB bus through that control switch.

3. The method according to claim 1 or 2, wherein, detecting (S113) the voltage value of the local terminal comprises:
detecting the voltage value of the local terminal through an A/D detection circuit.

4. A system for orderly identifying slave addresses from a master-slave fieldbus, comprising a master (10), at least one slave (20) and a socket voltage bus, SVB (30), wherein,
the SVB bus (30) is configured to: connect the master (10) and the slaves (20) in series, wherein at least one diode is connected in series between individual slaves by the SVB bus; and
the master (10) is configured to: when slave addresses conflict or a new slave is added, control the slave to output a preset voltage to the SVB bus, and reset each slave address by detecting a voltage value of each slave;
wherein the master (10) comprises:
an ID obtaining module (11), configured to obtain IDs of all slaves;
an assigning module (12), configured to assign a slave of any ID to output the preset voltage to the SVB bus;
a detection module (13), configured to detect the voltage value of a local terminal, and receive the voltage value and the ID of each slave detected and reported by each slave at the same time;
an address obtaining module (14), configured to obtain a corresponding relationship of the ID and the address of the slave of which the voltage value is not 0 according to the voltage values of the master and the slave, and obtain the address of the slave; and
a circulation module (15), configured to, when there is a slave of which a voltage value is 0, assign any slave of which the voltage value is 0 to output the preset voltage to the SVB bus, and return to detect the voltage value of the local terminal by the detection module and receive the voltage value and the ID of each slave detected and reported by each slave at the same time, until the detected voltage values of the SVB reported by all the slaves are not 0;
wherein the address obtaining module (14) comprises:
a calculation unit (141), configured to calculate a voltage difference between the voltage value of the master and the voltage value of each slave respectively;
a judging unit (142), configured to judge a socket number to which each slave belongs according to the voltage difference and a voltage drop of the diode; and
a setting unit (143), configured to set the socket number as the address of a corresponding slave.

5. The system according to claim 4, wherein, the assigning module (12) is configured to:
send a control signal to a control switch of the slave corresponding to said any ID through a field communication bus, and connect a voltage output end of the slave and the SVB bus through that control switch.

6. The system according to claim 4 or 5, wherein, the detection module (13) is configured to:
detect the voltage value of the local terminal through an A/D detection circuit.

## Patentansprüche

1. Verfahren zum ordnungsmäßigen Identifizieren von Slave-Adressen eines Master-Feldbusses, aufweisend:
Setzen (S10) eines Sockelspannungsbusses, SVB, der verwendet wird, um einen Master und Slaves in Reihe zu verbinden, wobei durch den SVB-Bus zwischen den einzelnen Slaves zumindest eine Diode in Reihe geschaltet wird; und
wenn Slave-Adressen in Konflikt miteinander stehen oder ein neuer Slave hinzugefügt wird, Anweisen (S11) der Slaves durch den Master, eine vorbestimmte Spannung an dem SVB-Bus auszugeben, und Zurücksetzen jeder Slave-Adresse mittels Detektieren eines jeweiligen Spannungswertes für jeden der Slaves, aufweisend:
(a). Der Master erfasst (S111) IDs sämtlicher Slaves;
(b). Der Master weist die Slaves mit jeglicher ID an, die vorbestimmte Spannung an dem SVB-Bus auszugeben;
(c). Der Master detektiert (S113) den Spannungswert an einem lokalen Anschluss und empfängt (S113) von jedem der detektierten Slaves den jeweiligen Spannungswert sowie die jeweilige ID, die von jedem der Slaves zugleich übermittelt werden;
(d). Der Master erfasst (S114) eine korrespondierende Beziehung zwischen der ID und der Adresse derjenigen Slaves, deren Spannungswert ungleich 0 ist, auf Basis der Spannungswerte des Masters und des jeweiligen Slaves, und erhält (S114) die Adresse des jeweiligen Slaves durch:
Berechnen (S1141) einer Spannungsdifferenz zwischen dem Spannungswert des Masters und dem Spannungswert des jeweiligen Slaves;
Bestimmen (S1142) einer dem jeweiligen Slave zugeordneten Sockelnummer auf Basis der Spannungsdifferenz und einem Spannungsabfall über der Diode; und
Setzen (S1143) der Sockelnummer als die Adresse des korrespondierenden Slaves; und
(e). Wenn es einen Slave gibt, dessen Spannungswert gleich 0 ist, weist (S115) der Master jeden Slave, dessen Spannungswert gleich 0 ist, an, die vorbestimmte Spannung an dem SVB-Bus auszugeben, und
Zurückkehren (S115) zum Schritt (c) bis für sämtliche Slaves die jeweiligen detektierten und übermittelten Spannungswerte am SVB ungleich 0 sind.

2. Verfahren gemäß Anspruch 1, wobei das Anweisen (S112) der Slaves mit jeglicher ID, die vorbestimmte Spannung an dem SVB-Bus auszugeben, aufweist:
Senden eines Steuersignals an einen Steuerschalter des zur jeweiligen ID korrespondierenden Slaves über einen Feldkommunikationsbus, und Verbinden eines Spannungsausgangs des Slaves und des SVB-Busses über diesen Steuerschalter.

3. Verfahren gemäß Anspruch 1 oder 2, wobei das Detektieren (S113) des Spannungswerts des lokalen Anschlusses aufweist:
Detektieren des Spannungswerts des lokalen Anschlusses mittels einer A/D-Detektionsschaltung.

4. System zum ordnungsmäßigen Identifizieren von Slave-Adressen eines Master-Slave-Feldbusses, der einen Master (10), zumindest einen Slave (20) und einen Sockelspannungsbus, SVB, (30) aufweist, wobei:
der SVB-Bus (30) konfiguriert ist: den Master (10) und die Slaves (20) in Reihe zu verbinden, wobei durch den SVB-Bus zwischen den einzelnen Slaves zumindest eine Diode in Reihe geschaltet ist; und
der Master (10) konfiguriert ist: wenn Slave-Adressen in Konflikt miteinander stehen oder ein neuer Slave hinzugefügt wird, die Slaves anzuweisen, eine vorbestimmte Spannung an dem SVB-Bus auszugeben, und jede Slave-Adresse mittels Detektieren eines jeweiligen Spannungswertes für jeden der Slaves zurückzusetzen;
wobei der Master (10) aufweist:
ein ID-Erfassungsmodul (11), das konfiguriert ist, die IDs sämtlicher Slaves zu erfassen;
ein Anweisungsmodul (12), das konfiguriert ist, die Slaves mit jeglicher ID anzuweisen, die vorbestimmte Spannung an dem SVB-Bus auszugeben;
ein Detektionsmodul (13), das konfiguriert ist, den Spannungswert an einem lokalen Anschluss zu detektieren und von jedem der detektierten Slaves den jeweiligen Spannungswert sowie die jeweilige ID, die vom jeweiligen Slave zugleich übermittelt werden, zu erfassen;
ein Adresserfassungsmodul (14), das konfiguriert ist, eine korrespondierende Beziehung zwischen der ID und der Adresse eines Slaves, dessen Spannungswert ungleich 0 ist, auf Basis der Spannungswerte des Masters und des Slaves zu erfassen und die Adresse des Slaves zu erfassen; und
ein Umlaufmodul (15), das konfiguriert ist, wenn es einen Slave gibt, dessen Spannungswert gleich 0 ist, jeden Slave, dessen Spannungswert gleich 0 ist, anzuweisen, die vorbestimmte Spannung an dem SVB-Bus auszugeben, und
dazu zurückzukehren, mittels des Detektionsmoduls den Spannungswert an dem lokalen Anschluss zu detektieren und von jedem der detektierten Slaves den jeweiligen Spannungswert sowie die jeweilige ID, die vom jeweiligen Slave zugleich übermittelt werden, zu empfangen, bis für sämtliche Slaves die jeweiligen detektierten und übermittelten Spannungswerte am SVB ungleich 0 sind;
wobei das Adresserfassungsmodul (14) aufweist:
eine Berechnungseinheit (141), die konfiguriert ist, eine Spannungsdifferenz zwischen dem Spannungswert des Masters und dem Spannungswert des jeweiligen Slaves zu berechnen;
Eine Bestimmungseinheit (142), die konfiguriert ist, auf Basis der Spannungsdifferenz und einem Spannungsabfall über der Diode eine dem jeweiligen Slave zugeordnete Sockelnummer festzustellen; und
Eine Setzeinheit (143), die konfiguriert ist die Sockelnummer als die Adresse eines korrespondierenden Slaves zu setzen.

5. System gemäß Anspruch 4, wobei das Anweisungsmodul (12) konfiguriert ist:
ein Steuersignal an einen Steuerschalter des zur jeweiligen ID korrespondierenden Slaves über einen Feldkommunikationsbus zu senden, und einen Spannungsausgang des Slaves und den SVB-Busses über diesen Steuerschalter zu verbinden.

6. System gemäß Anspruch 4 oder 5, wobei das Detektionsmodul (13) konfiguriert ist:
den Spannungswert des lokalen Anschlusses mittels einer A/D-Detektionsschaltung zu detektieren.

## Revendications

1. Procédé d'identification de façon ordonnée d'adresses d'esclave d'un bus de terrain maître-esclave, **caractérisé en ce qu'**il comprend :
le réglage (S10) d'un bus de tension de port, SVB, qui est utilisé pour connecter un maître et des esclaves en série, dans lequel, au moins une diode est connectée en série entre des esclaves individuels par le bus SVB ; et
lorsque des adresses d'esclave entrent en conflit ou qu'un nouvel esclave est ajouté, la commande (S11) par le maître de l'esclave pour fournir en sortie une tension préréglée au bus SVB, et la réinitialisation de chaque adresse d'esclave en détectant une valeur de tension de chaque esclave, comprenant :
(a). l'obtention (S111), par le maître, d'identifiants de tous les esclaves ;
(b). l'attribution (S112), par le maître, d'un esclave de tout identifiant pour fournir en sortie la tension préréglée au bus SVB ;
(c). la détection (S113), par le maître, de la valeur de tension d'un terminal local, et la réception (S113) de la valeur de tension et de l'identifiant de chaque esclave détectés et signalés par chaque esclave en même temps ;
(d). l'obtention (S114), par le maître, d'une relation correspondante de l'identifiant et de l'adresse de l'esclave dont la valeur de tension n'est pas de 0 selon les valeurs de tension du maître et de l'esclave, et l'obtention (S114) de l'adresse de l'esclave par :
le calcul (S1141) d'une différence de tension entre la valeur de tension du maître et la valeur de tension de chaque esclave, respectivement ;
l'estimation (S1142) d'un numéro de port auquel appartient chaque esclave selon la différence de tension et une chute de tension de la diode ; et
le réglage (S1143) du numéro de port en tant qu'adresse d'un esclave correspondant ; et
(e). lorsqu'on a un esclave dont une valeur de tension est de 0, l'attribution (S115), par le maître, de tout esclave dont la valeur de tension est de 0 pour fournir en sortie la tension préréglée au bus SVB, et le retour (S115) à l'étape (c), jusqu'à ce que les valeurs de tension détectées du SVB signalées par tous les esclaves ne soient pas de 0.

2. Procédé selon la revendication 1, dans lequel, l'attribution (S112) d'un esclave de tout identifiant pour fournir en sortie la tension préréglée au bus SVB comprend :
l'envoi d'un signal de commande à un commutateur de commande de l'esclave correspondant audit tout identifiant par le biais d'un bus de communication de terrain, et la connexion d'une extrémité de sortie de tension de l'esclave et du bus SVB par l'intermédiaire de ce commutateur de commande.

3. Procédé selon la revendication 1 ou 2, dans lequel, la détection (S113) de la valeur de tension du terminal local comprend :
la détection de la valeur de tension du terminal local par le biais d'un circuit de détection A/N.

4. Système d'identification de façon ordonnée d'adresses d'esclave d'un bus de terrain maître-esclave, comprenant un maître (10), au moins un esclave (20) et un bus de tension de port, SVB (30), dans lequel,
le bus SVB (30) est configuré pour: connecter le maître (10) et les esclaves (20) en série, dans lequel, au moins une diode est connectée en série entre des esclaves individuels par le bus SVB ; et
le maître (10) est configuré pour: lorsque des adresses d'esclave entrent en conflit ou qu'un nouvel esclave est ajouté, commander à l'esclave de fournir en sortie une tension préréglée au bus SVB, et réinitialiser chaque adresse d'esclave en détectant une valeur de tension de chaque esclave ;
dans lequel le maître (10) comprend :
un module d'obtention d'identifiant (11), configuré pour obtenir des identifiants de tous les esclaves ;
un module d'attribution (12), configuré pour attribuer un esclave de tout identifiant pour fournir en sortie la tension préréglée au bus SVB ;
un module de détection (13), configuré pour détecter la valeur de tension d'un terminal local, et recevoir la valeur de tension et l'identifiant de chaque esclave détectés et signalés par chaque esclave en même temps ;
un module d'obtention d'adresse (14), configuré pour obtenir une relation correspondante de l'identifiant et de l'adresse de l'esclave dont la valeur de tension n'est pas de 0 selon les valeurs de tension du maître et de l'esclave, et obtenir l'adresse de l'esclave ; et
un module de circulation (15), configuré pour, lorsqu'on a un esclave dont une valeur de tension est de 0, attribuer tout esclave dont la valeur de tension est de 0 pour fournir en sortie la tension préréglée au bus SVB, et recommencer à détecter la valeur de tension du terminal local par le module de détection et recevoir la valeur de tension et l'identifiant de chaque esclave détectés et signalés par chaque esclave en même temps, jusqu'à ce que les valeurs de tension détectées du SVB signalées par tous les esclaves ne soient pas de 0 ;
dans lequel le module d'obtention d'adresse (14) comprend :
une unité de calcul (141), configurée pour calculer une différence de tension entre la valeur de tension du maître et la valeur de tension de chaque esclave, respectivement ;
une unité d'estimation (142), configurée pour estimer un numéro de port auquel appartient chaque esclave selon la différence de tension et une chute de tension de la diode ; et
une unité de réglage (143), configurée pour régler le numéro de port en tant qu'adresse d'un esclave correspondant.

5. Système selon la revendication 4, dans lequel, le module d'attribution (12) est configuré pour :
envoyer un signal de commande à un commutateur de commande de l'esclave correspondant à tout identifiant par le biais d'un bus de communication de terrain, et connecter une extrémité de sortie de tension de l'esclave et le bus SVB par l'intermédiaire de ce commutateur de commande.

6. Système selon la revendication 4 ou 5, dans lequel, le module de détection (13) est configuré pour :
détecter la valeur de tension du terminal local par le biais d'un circuit de détection A/N.
